(19) Europäisches Patentamt
European Patent Office
Office européen des brevets

(11) **EP 3 349 440 A1**

(12) **EUROPEAN PATENT APPLICATION**

(43) Date of publication:
**18.07.2018 Bulletin 2018/29**

(51) Int Cl.:
***H04N 7/18*** *(2006.01)*          ***B61D 49/00*** *(2006.01)*
***B61L 15/00*** *(2006.01)*

(21) Application number: **18151266.6**

(22) Date of filing: **11.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **12.01.2017   JP 2017003127
19.07.2017   GB 201711624**

(71) Applicants:
• **Hitachi Kokusai Electric Inc.**
  **Tokyo 105-8039 (JP)**
• **Hitachi Railway Europe**
  **London, Greater London EC1N 2PB (GB)**

(72) Inventors:
• **ITO, Tetsuya**
  **Tokyo, 1878511 (JP)**
• **KOTO, Haruhiro**
  **Tokyo, 1878511 (JP)**
• **MATSUKAWA, Tomoki**
  **Tokyo, 1878511 (JP)**
• **NAOI, Hironori**
  **London, Greater London EC1N 2PB (GB)**
• **KONISHI, Kenta**
  **London, Greater London EC1N 2PB (GB)**

(74) Representative: **J A Kemp**
  **14 South Square**
  **Gray's Inn**
  **London WC1R 5JJ (GB)**

(54) **MONITORING SYSTEM AND MONITORING METHOD**

(57)      [Purpose] To provide a system where a trainman can recognize the movement of passengers quickly and accurately, and additionally provide the arrangement of cameras having fewer blind spots.

[Means for Achieving Purpose] Cars 111 through 116 respectively have on either side of the car two doors 121 and 122 or 123 and 124, front and rear, and two cameras 131 and 132 or 133 and 134 that are arranged so as to face different directions between the two doors 121 and 122 or 123 and 124. A monitoring system 100 controls the display so that a number of camera images taken by the cameras 131 and 132 or 133 and 134 on each car are allocated to the respective divided areas in the display region of each monitor 141 and 142. The camera images are allocated to the respective areas on the basis of information that indicates the direction in which the train moves and the side where the doors open.

Fig. 5

EP 3 349 440 A1

## Description

[Technical Field]

The present invention relates to a train system, and in particular, to a monitoring system and a monitoring method for supporting a driver and a trainman so that they can efficiently confirm the movements of passengers who are close to the doors of the train.

[Background Art]

In a train system, a driver or a trainman (hereinafter, both of them are simply referred to as trainman) checks by means of images the passengers who are moving along the platform so as to confirm the safety of the passengers before operating the doors that are to be opened and closed. The images of the passengers are taken by cameras that have been installed on the main bodies of the cars or along the platform. In Japan, for example, a system where cameras installed along a platform are used to show images on monitors along the platform or in the cabin of a train is typical. Meanwhile, in England, for example, a system where cameras installed on the side of the main bodies of cars are used to show images on a monitor in the cabin is typical. Such a difference depends on whether the same business entity manages the operation of trains and the infrastructure or different business entities manage these.

In the following, an onboard camera type monitoring system where cameras are installed on the main bodies of cars is referred to. For example, Patent Literature 1 discloses a monitoring system where a camera is provided so as to be adjacent to each door of the cars.

[Citation List]

[Patent Literature]

Patent Literature 1: International Publication No. 2015/145736

[Summary of Invention]

[Technical Problem]

In a monitoring system for a train, the monitoring of the safety of passengers is required to be in real time, and therefore, analog systems where no delay occurs have been prioritized for use. In recent years, however, low delay transmission has become possible due to the progress of IP technology, and therefore, all the apparatuses have been connected to the IP network. As for one advantage of the IP system, the IP technology makes it possible to connect apparatuses with one cable, and therefore, the costs for cables can be reduced. In addition, one cable makes possible the transmission of not only image data, but also alarm information, train information and other information. The images taken by a number of cameras are encoded by each camera so as to be transmitted to a monitor via the IP network, and then decoded in the monitor for displaying images in divided areas.

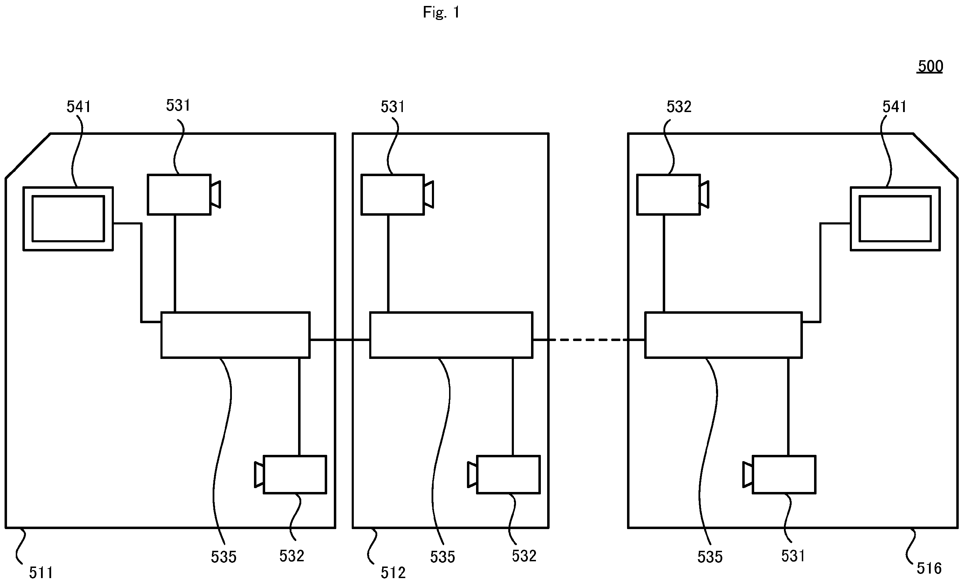

FIG. 1 shows an example of the configuration of a conventional on-board camera type monitoring system 500. The monitoring system 500 is applied to a train comprising six cars 511 through 516. Two cameras 531 and 532 and a switching hub 535 are installed in each car 511 through 516. In addition, the first and sixth cars 511 and 516 include a cabin in which a monitor 541 is installed. The switching hub 535 in each car is connected to the cameras 531 and 532 in the car and the switching hub 535 in adjacent cars. The switching hub 535 in the first and sixth cars is also connected to the monitor 541 in the car.

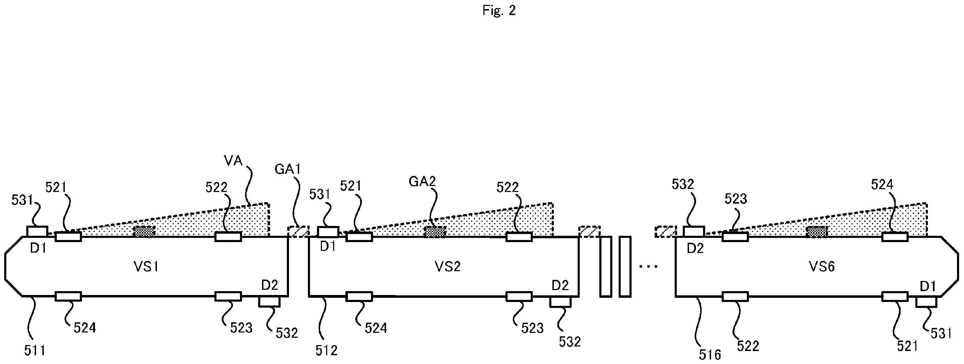

FIG. 2 shows an example of the arrangement of cameras in the monitoring system 500. Two doors 521 and 522, front and rear, and a camera 531 are arranged on one side of each car VS1 through VS6, and at the same time, two doors 523 and 524, front and rear, and a camera 532 are arranged on the other side. That is to say, one camera 531 or 532 covers the entirety of the monitoring area VA on one side of a car.

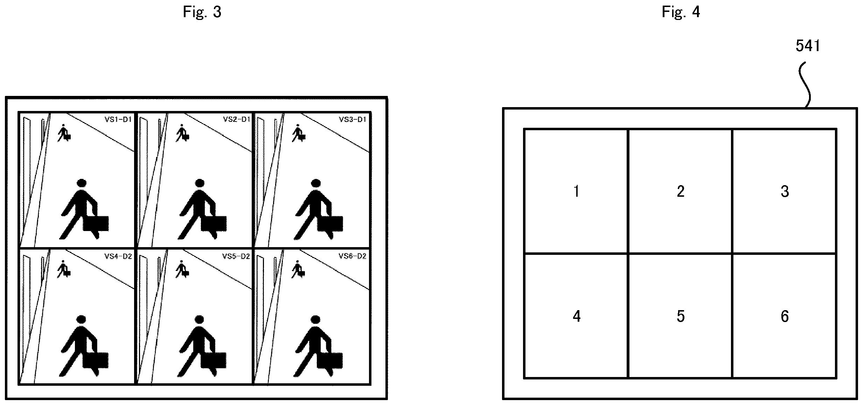

FIG. 3 shows a manner how one monitor 541 that can display images in six divided areas simultaneously monitors six camera images at the most. In this example, all the camera images are taken in the same way.

Concerning this way of displaying images in divided areas, the cameras can be allocated in a very simple way. FIG. 4 shows an example of the allocation of cameras in six divided areas. The display area of the monitor 541 is divided into six areas, and serial numbers "1" through "6" are allocated in such an order starting from the upper left towards the lower right as display numbers that identify the respective areas. Thus, camera images are arranged in the respective areas following the VS numbers that identify the respective cars. The VS numbers are allocated in the order of cars from the front to the rear relative to the direction in which the train moves, for example.

There is a potential problem with the above-described monitoring system in that how a trainman recognizes the movements of passengers instantly from the many camera images before operating the doors safely.

In the camera arrangement in FIG. 2, for example, it becomes difficult for a trainman to recognize a passenger who is close to the further door depending on the length of the car or the location of the doors. That is to say, in the case where two doors are provided away from each other at the two ends of each car, passengers close to the door that is further away from the camera are displayed in a smaller size, and therefore, it is difficult for a trainman to recognize the movement of such passengers. The configuration where a camera is provided for each door as in Patent Literature 1 is possible as a measure against this. However, in the case of a train comprising 12 cars, for example, the number of camera images that should be monitored by a trainman is 24, which is quite large, making the burden on the trainman heavy. Therefore, it is necessary to devise how the camera images are displayed so that a trainman can recognize the movement of passengers quickly and accurately.

The present invention is provided in view of the above-described conventional situations, and an object thereof is to provide a system where a trainman can recognize the movement of passengers quickly and accurately.

[Solution to Problem]

In order to achieve the above-described object, the monitoring system and the monitoring method according to the present invention are provided as follows.

(1) A monitoring system for a train comprised of cars having a number of doors on both sides, where cameras for taking an image of at least the vicinity of a door and a monitor for displaying camera images that are taken by the above-described cameras are mounted on or in the above-described train, is characterized in that the above-described cameras are allocated for the respective doors, the display area of the above-described monitor is divided into a number of areas, a display control unit is provided that can control the system so that a number of camera images taken by the cameras on the respective cars are allocated to the respective areas for display, and the above-described display control unit controls the allocation of the camera images for the respective areas on the basis of information that indicates the direction in which the above-described train moves and information that indicates the side on which the doors open.

(2) The monitoring system according to the above (1) is characterized in that two cameras are provided so as to respectively face two doors that are provided on either side of the above-described cars, and the two cameras are arranged so as to face each other.

(3) The monitoring system according to the above (1) or (2) is characterized in that the above-described display control unit allocates the two camera images taken by the above-described two cameras to two areas that are adjacent to each other on the above-described monitor.

(4) The monitoring system according to the above (3) is characterized in that the above-described display control unit controls the allocation of the camera images for the respective areas so that the position at which the car is displayed becomes constant within the two camera images irrelevant of the side where the doors open.

(5) The monitoring system according to the above (4) is characterized in that the above-described display control unit controls the allocation of the camera images for the respective areas so that the position at which the car is displayed within the two camera images becomes the side of the image border between the two camera images.

(6) The monitoring system according to any of the above (1) through (5) is characterized in that the above-described display control unit controls the allocation of the camera images for the respective areas so that the camera images are aligned in the same order as the alignment of the doors of the above-described train.

(7) The monitoring system according to any of the above (1) through (5) is characterized in that the above-described display control unit controls the allocation of the camera images for the respective areas so that the camera images are aligned in the same order as the alignment of the cameras on the above-described train.

(8) The monitoring system according to any of the above (1) through (7) is characterized in that the above-described display control unit carries out a process for flipping vertically on the camera images taken by the cameras that are attached upside down.

(9) The monitoring system according to any of the above (1) through (7) is characterized in that a camera carries out a process for flipping vertically on the camera image that is taken by the camera in the case where the camera is attached upside down.

(10) The monitoring system according to any of the above (1) through (9) is characterized in that the above-described display control unit carries out a process for flipping horizontally on all the camera images that are used in the case where the doors on a predetermined side open so that the direction in which the above-described train moves becomes constant within the camera images irrelevant of the side where the doors open.

(11) The monitoring system according to any of the above (1) through (10) is characterized in that the above-described display control unit determines the areas to which the camera images are allocated on the basis of the information for identifying the respective areas in the display region of the above-described monitor, the information for identifying the respective cars, and the information for identifying the locations of the cameras on each car that have been set to be the same for all the cars.

(12) The monitoring system according to any of the above (1) through (11) is characterized in that the above-described display control unit switches the display on the above-described monitor in such a manner that the camera image allocated for the selected area from among the above-described areas is enlarged in response to the selection.

(13) The monitoring system according to the above (12) is characterized in that the above-described display control unit displays an enlarged camera image that is allocated to the selected area and an enlarged camera image taken by the other camera on the same car in response to the selection, and displays a further enlarged camera image that is allocated to the further selected area in response to the further selection between the two enlarged camera images.

(14) The monitoring system according to any of the above (1) through (13) is characterized in that the respective areas in the display region of the above-described monitor display a camera image and information for identifying the camera that takes the camera image.

(15) The monitoring system according to any of the above (1) through (14) is characterized in that the above-described display control unit controls the allocation of the camera images for respective areas so that the position at which the car is displayed within two camera images of the same car becomes the side of the image border between the two camera images, and displays the two camera images without an edge line at the border between the two camera images.

(16) The monitoring system according to the above (15) is characterized in that the above-described display control unit displays the two camera images without the edge line at the border between two camera images, and with the edge line at other borders of the two camera images.

(17) A monitoring method using a monitoring system, where a number of cameras for taking an image of at least the vicinity of a door of a car that makes up the train and a monitor for displaying camera images that are taken by the cameras are mounted on and in the above-described train, is characterized in that: the display region on the above-described monitor is divided into a number of areas; an area ID is set for each area; the area ID for displaying each camera image is calculated on the basis of the information for indicating the direction in which the above-described train moves, the information on the side where the doors open, and the information for identifying the respective cameras; and the camera image is displayed in the area that corresponds to the calculated area ID.

[Advantageous Effects of Invention]

According to the present invention, the trainman can recognize the movement of passengers quickly and accurately.

[Brief Description of Drawings]

FIG. 1 is a diagram showing an example of the configuration of a conventional monitoring system;
FIG. 2 is a diagram showing an example of the camera arrangement in the conventional monitoring system;
FIG. 3 is a diagram showing an example of a display of images in divided areas in the conventional monitoring system;
FIG. 4 is a diagram showing an example of the allocation of cameras on a display for showing images in divided areas in the conventional monitoring system;
FIG. 5 is a diagram showing an example of the configuration of the monitoring system according to one embodiment of the present invention;
FIG. 6 is a diagram showing an example of the camera arrangement in the monitoring system in FIG. 5;
FIG. 7A is a front diagram showing a DOO camera that is used in the monitoring system in FIG. 5;
FIG. 7B is a side diagram showing the DOO camera that is used in the monitoring system in FIG. 5;
FIG. 8 is a diagram showing an example of the camera images taken by DOO cameras;
FIG. 9 is a flow chart showing an example of the operation flow in the monitoring system in FIG. 5;
FIG. 10 is a diagram showing an example of the allocation of cameras in a display with divided areas in the monitoring system in FIG. 5;
FIG. 11 is a flow chart showing the flow of the process for a first display system of a display with divided areas in the monitoring system in FIG. 5;
FIG. 12A is a diagram showing an example of a display with divided areas on the right door side in accordance with the first display system;
FIG. 12B is a diagram showing an example of a display with divided areas on the left door side in accordance with the first display system;
FIG. 13 is a flow chart showing the flow of the process for a second display system of a display with divided areas in the monitoring system in FIG. 5;
FIG. 14A is a diagram showing an example of a display with divided areas on the right door side in accordance with the second display system;
FIG. 14B is a diagram showing an example of a display with divided areas on the left door side in accordance with the second display system;
FIG. 15A is a diagram showing the direction in which the train moves in the screen for the right door side in accordance with the second display system;
FIG. 15B is a diagram showing the direction in which the train moves in the screen for the left door side in accordance with the second display system;
FIG. 16 is a flow chart showing the flow of the process for a third display system of a display with divided areas in the monitoring system in FIG. 5;
FIG. 17A is a diagram showing an example of a display with divided areas on the right door side in accordance with the third display system;
FIG. 17B is a diagram showing an example of a display with divided areas on the left door side in accordance with the third display system;

FIG. 18A is a diagram showing the direction in which the train moves in the screen for the right door side in accordance with the third display system;

FIG. 18B is a diagram showing the direction in which the train moves in the screen for the left door side in accordance with the third display system;

FIG. 19 is a diagram showing another example of divided areas in the display region of the monitor;

FIG. 20 is a diagram showing still another example of divided areas in the display region of the monitor;

FIG. 21 is a diagram showing another example of the camera arrangement in the monitoring system in FIG. 5;

FIG. 22 is a diagram showing an example of a car where four doors and four cameras are arranged on each side;

FIG. 23A is a diagram showing a modified example of a display with divided areas on the right door side in accordance with the second display system; and

FIG. 23B is a diagram showing a modified example of a display with divided areas on the left door side in accordance with the second display system.

[Description of Embodiments]

The present invention relates to a monitoring system where cameras for taking an image of at least the vicinity of a door of a car that makes up a train and a monitor for displaying camera images that are taken by the cameras are mounted on and in the train. The monitoring system according to the present invention has a configuration where a camera is provided for each of a number of doors that are provided on each side of a car, and which is provided with a display control unit for controlling the system so that the monitor displays a number of camera images taken by the cameras on the respective cars in such a manner that the camera images are respectively allocated to a number of divided areas of the display region of the monitor. The display control unit controls the allocation of camera images to the respective areas on the basis of the information for indicating the direction in which the train moves and the direction for indicating the side where doors open.

In the following, one embodiment of the present invention is described in reference to the figures.

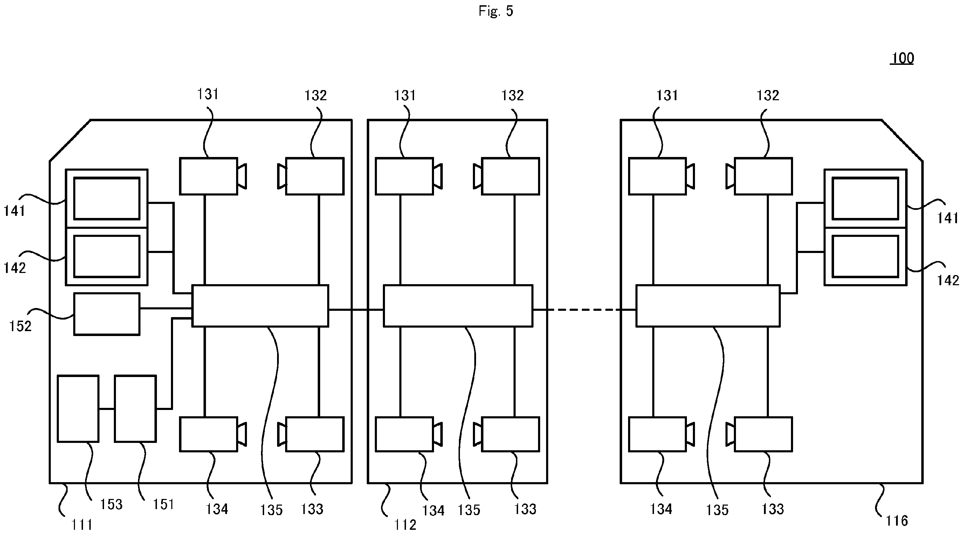

FIG. 5 is a diagram showing an example of the configuration of the monitoring system according to one embodiment of the present invention. The monitoring system 100 in FIG. 5 is mounted in a train comprised of six cars 111 through 116. In the case where the train moves in the direction towards the left in the figure, the first car 111 on the left becomes the front, and the sixth car 116 on the right becomes the rear. Conversely, in the case where the train moves in the direction towards the right in the figure, the sixth car 116 on the right becomes the front, and the first car 111 on the left becomes the rear.

The monitoring system 100 includes cameras 131 through 134, a switching hub 135, monitors 141 and 142, a server 151, a video recorder 152 and a host server 153. These apparatuses are connected using a network cable. Furthermore, a power supply cable is connected to these apparatuses so that power is supplied from the power supply unit (not shown) in each car.

Four cameras 131 through 134 and a switching hub 135 are installed on and in each car 111 through 116. In addition, the first car 111 and the sixth car 116 have a cabin, and two monitors 141 and 142 are installed within the cabins. The cameras 131 through 134 and the monitors 141 and 142 in each car are connected to the switching hub 135 in the car through the network cable. Furthermore, a server 151, a video recorder 152 and a host server 153 are installed in the first car 111. The server 151 and the video recorder 152 are connected to the switching hub 135 through the network cable, and the host server 153 is connected to the server 151 through the network cable. Here, a server 151 and a host server 153 may be provided in the sixth car 116 in the same manner as in the first car 111 so that these apparatuses are replicated.

The switching hub 135 in each car is connected to the switching hubs 135 in the adjacent cars through the network cable. Thus, the switching hubs 135 respectively mounted in adjacent cars are connected to each other so as to form one network throughout the train. Here, for example, these network cables run beneath the floor of the cars and are connected to connection boxes (not shown), and the connection boxes in adjacent cars are connected through a jumper wire between the cars.

The host server 153 is a unit for managing the operation of the train, for example. As an example of the host server 153, a TMS (Train Management System) is used. The host server 153 outputs the information on the operation of the train to the servers 151 at predetermined periods during the operation of the train. The information on the operation of the train includes the train's speed, the opening and closing of the doors (whether the doors for allowing passengers to get on or off the car are open or closed), the side of the doors through which passengers get on or off at the station's platform the train will stop at next or the station the train is currently at (whether passengers get on or off through the doors on the left side or the right side, for example), the number of cars and the direction in which the train is moving.

A trainman boards the car that becomes the front in the direction in which the train is to move (the first car 111, for example) and operates the train (runs the train and opens and closes the doors) by themselves.

All the cameras 131 through 134 respectively take images within a predetermined view (the field angle) at a predetermined image-taking frame rate. In addition, the cameras 131 through 134 compress the images that have been taken (live images) in the format of H.264, MPEG4, JPEG or the like, and transmit the resulting images to the video recorder 152 and the monitors 141 and 142 through the switching hub 135 and the network cable.

The video recorder 152 records the inputted camera images at all times with the images being related to the camera by which the image is taken and the time at which the image is taken.

The monitors 141 and 142 display the live images taken by all the cameras 131 through 134 or the images recorded by the video recorder 152 on divided areas after image processing, such as cutting out or flipping an image, has been carried out in accordance with an instruction by the server 151. Here, the recorded images are used as the material to be analyzed or evidence images at the time of an emergency, mainly an accident or the occurrence of a crime. In addition, the main setting of the server 151, the monitors 141 and 142, the cameras 131 through 134 and the video recorder 152 is carried out by an operator in advance when the system starts operating. Though in the present embodiment the monitors 141 and 142 have a display control unit for controlling the display on divided areas, the display control unit may be provided in the server 151. That is to say, the server 151 may generate image data for the display on divided areas and transmit the resulting data to the monitors so that the monitors display the images.

The cameras 131 through 134 automatically transmit images to the video recorder 152 and the monitors 141 and 142 at a predetermined frame rate. Alternatively, the cameras 131 through 134 transmit images to the video recorder 152 and the monitors 141 and 142 at a predetermined frame rate in response to a transmission request that is transmitted from the monitors 141 and 142 through the switching hub 135.

Here, it is possible for an operator to preset whether the cameras 131 through 134 automatically transmit images or transmit images in response to a transmission request from the monitors 141 and 142 when the system starts operating. It is also possible for a trainman to switch the way the images are transmitted by operating the server 151.

A trainman can confirm the images taken by the cameras 131 through 134, respectively, on the monitors 141 and 142 in the car that is in the front in the direction in which the train is moving. That is to say, in the case where the train is moving in the direction towards the left in the figure, the camera images can be confirmed on the monitors 141 and 142 in the first car 111. In the case where the train is moving in the direction towards the right in the figure, the camera images can be confirmed on the monitors 141 and 142 in the sixth car 116.

It is preferable for the two monitors 141 and 142 in the front car to be arranged next to each other above and below or side-by-side so that the trainman can check the two monitors 141 and 142 at the same time. The display region of the monitors in the present embodiment is divided into 12 areas in total, which are two rows of six areas. Accordingly, one monitor can display all the camera images in the train comprised of six cars (12 camera images in total on one side of the train) simultaneously. The simultaneous use of two monitors makes it possible to display all the camera images for a train comprised of 12 cars at maximum.

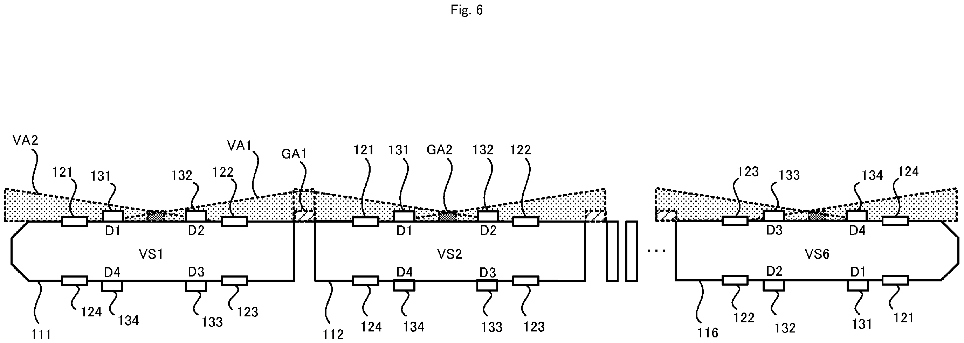

FIG. 6 shows an example of the camera arrangement in the monitoring system 100 in FIG. 5. Two doors 121 and 122 and two cameras 131 and 132 are provided on one side of each car, and two doors 123 and 124 and two cameras 133 and 134 are also provided on the other side. That is to say, the monitoring area (VA1 or VA2) on one side of a car is covered by two cameras 131 and 132 or 133 and 134. As an example of the cameras 131 through 134, DOO (driver-only operation) cameras, which are a type of IP camera, are used. Thus, in the present embodiment, cameras are individually provided for a number of doors that are respectively provided on both sides of a car.

In the case where a platform curves, sometimes there is a large gap between a car and the platform. In the case where a platform curves in such a manner as to protrude towards the train, there are gaps in the areas GA1 that are along the spaces between cars (see FIG. 2). In the case where a platform curves in such a manner as to protrude away from the train, there are gaps in the area GA2 that are along the middle portion of the cars (portions between the two doors front and rear) (see FIG. 2). It is preferable for a trainman to monitor the movement of passengers in proximity to these gaps in order to prevent an accident that involves a passenger due to these gaps. In the conventional camera arrangement as in FIG. 2, however, the areas GA1 along the space between cars are too far away from the camera, which creates a blind spot. Therefore, it is extremely difficult to monitor the gap between the platform and the train in the areas GA1. Accordingly, it is required to devise the camera arrangement so that the blind spots can be reduced as much as possible.

In the present embodiment, the camera is arranged so that images of the areas close to the doors, the platform and the gaps between the cars and the platform can be taken. Typically, as shown in FIG. 6, two cameras are arranged between the two doors, front and rear, that are provided on both sides of each car so as to face different directions. In addition, each camera is located between a door and the middle of the car so as to face the center of the car. That is to say, the camera that is attached to a car so as to face the rear door monitors the monitoring area VA1 that is behind the camera. In addition, the camera that is attached to a car so as to face the front door monitors the monitoring area VA2 that is in front of the camera.

Thus, a camera arrangement having fewer blind spots can be provided. That is to say, images of not only the areas close to the doors of each car, but also the areas GA1 along the space between cars can be taken so that the gaps between the train and the platform in the areas GA1 can be monitored. As shown in FIG. 6, the two cameras are arranged so as to face each other, which allows for the taking of an image of the area GA2 along the middle portion of the car so that the gap between the train and the platform in the area GA2 can be monitored. Here, it is preferable for the two cameras to be provided at a certain distance away from each other so that the area GA2 along the middle portion of the car can be sufficiently included in the images taken by the cameras.

As shown in FIG. 6, camera numbers D1 through D4 are allocated clockwise to the four cameras 131 through 134 that are provided on each car as viewed from the top. These camera numbers are information for identifying the locations of the cameras in each car and are set in the same manner for all the cars. Typically, the upper left corner in the first through third cars in the figure, which corresponds to the front right side in the case where the first car is the front car, is made the starting point to allocate the camera numbers D1 through D4 clockwise. In addition, in the fourth through sixth cars that are connected to the first through third cars with the front and rear inverted, the lower right corner in the figure, which corresponds to the front right side in the case where the sixth car is the front car, is made the starting point to allocate the camera numbers D1 through D4 clockwise.

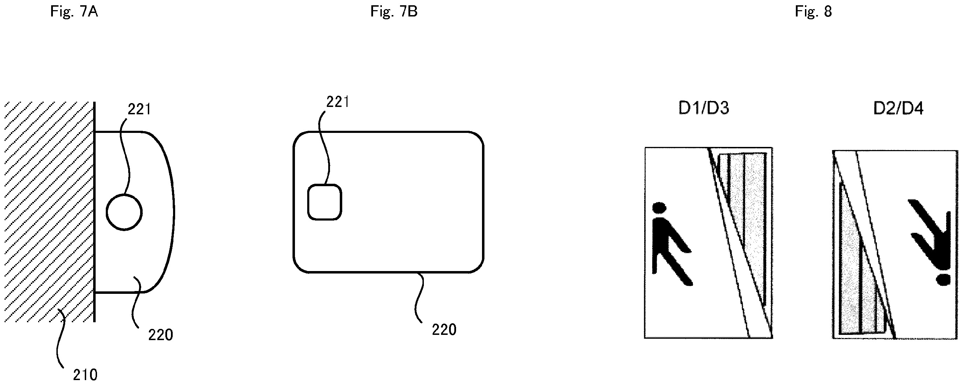

In the case where DOO cameras are used for monitoring, a problem with image inversion arises. FIGS. 7A and 7B are a front diagram and a side diagram showing a DOO camera. A DOO camera 220 has a lens 221 and is attached to the outer wall 210 of a car with the lens 221 being directed towards the door of which an image is to be taken. The DOO camera 220 is in a flat shape in order to reduce the air resistance and prevent gravel from hitting the camera, and thus has only one surface that is to be attached onto the outer wall 210 of a car.

Therefore, it is necessary to turn one DOO camera by 180 degrees in order to arrange two DOO cameras so that they face the opposite directions. That is to say, DOO camera D2 that faces DOO camera D1 is turned by 180 degrees relative to DOO camera D1 and is attached to the car in the upside-down position. Likewise, DOO camera D4 that faces DOO camera D3 is turned by 180 degrees relative to DOO camera D3 and is attached to the car in the upside-down position. Accordingly, as an example of the camera images being shown in FIG. 8, the camera images taken by DOO cameras D1 and D3 are right side up, whereas the camera images taken by DOO cameras D2 and D4 are upside down. Thus, the camera images may be upside down depending on the direction in which the DOO camera takes the image and the position in which the DOO camera is attached. Accordingly, it is necessary for the camera images taken by DOO cameras D2 and D4 to be flipped vertically.

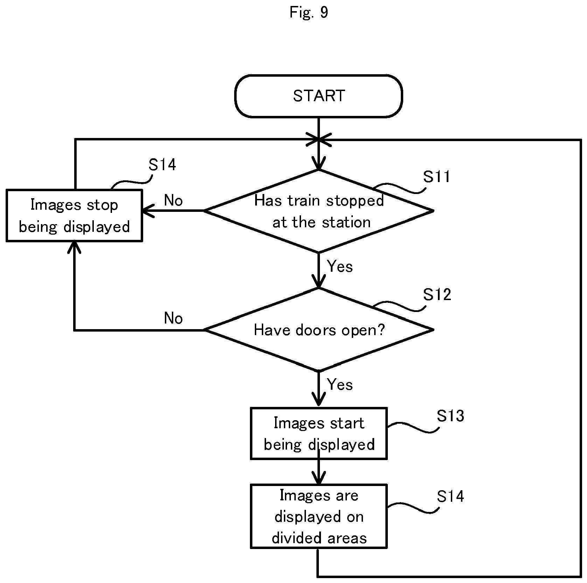

Next, the operation of the monitoring system 100 in the present embodiment is described in reference to the operation flow shown in FIG. 9. Here, the cameras 131 through 134 in each car can be controlled via network to start or stop delivering images. In addition, the monitors 141 and 142 acquire information on the frames for cutting out the images taken by each camera and the control information for a display with divided areas from the server 151 when the operation of the train starts, and store these pieces of information, and thus control the display with divided areas on the basis of these pieces of information. The control information for a display with divided areas include information on the format for the division of the display region on the monitors and information on the display numbers for identifying the divided areas, respectively.

The server 151 determines whether or not the train has stopped at a station on the basis of the information of the train's speed from among the above-described operation information that is received from the host server 153 (step S11). For example, whether or not the train has stopped at a station can be determined by determining if the train's speed is at a predetermined speed or greater or less than the predetermined speed. The predetermined speed may be 3 km/h, for example, but is not limited to this, and may be any speed with which it is possible to determine whether or not the train has stopped.

In the case where the server 151 determines that the train has stopped at a station in step S11, the server 151 determines whether or not the doors of the cars are open on the basis of the information on the opening and closing of the doors through which passengers are to get off or on the train from among the operation information (step S12).

In the case where the server 151 determines that the doors of the car are open in step S12, the server 151 transmits an instruction to start displaying images to the monitors 141 and 142 (step S13). At this time, the server 151 simultaneously or sequentially transmits to the monitors 141 and 142 the information on the side where passengers get on or off the train (and the information on the direction in which the train moves) from among the operation information.

The monitors 141 and 142 display the camera images that are taken by a number of cameras on divided areas in response to the reception of the instruction to start displaying images from the server 151 (step S14). The details of the display with divided areas are described below. After that, the procedure returns to step S11 and the same process is repeated.

In the case where the server 151 determines that the train is not at a station in step S11 or the doors of the cars are not open in step S12, an instruction to stop displaying images is transmitted to the monitors 141 and 142 (step S15). In the case where images have not started being displayed, no operation is necessary. After that, the procedure returns to step S11 and the same process is repeated.

Taking into consideration the arrangement of the respective camera images on a monitor, the monitoring system 100 in the present embodiment displays the images on divided areas in such a manner that a trainman can simply recognize the monitoring areas that correspond to the respective camera images. For example, camera images are arranged on a monitor in such a manner that the camera images in the order of the places from the front to the rear in the direction in which the train moves are allocated in the order starting from the upper left of the monitor to the lower right.

In the following, a typical process for displaying images on divided areas in step S14 is described. A case where the display region on the monitor 141 is divided into 12 areas in order to display camera images for the train comprised of six cars is described as an example below. Though three types of display systems, a first display system, a second display system and a third display system, are described, the embodiment is not limited to these, and images may be displayed on the divided areas in accordance with other display systems.

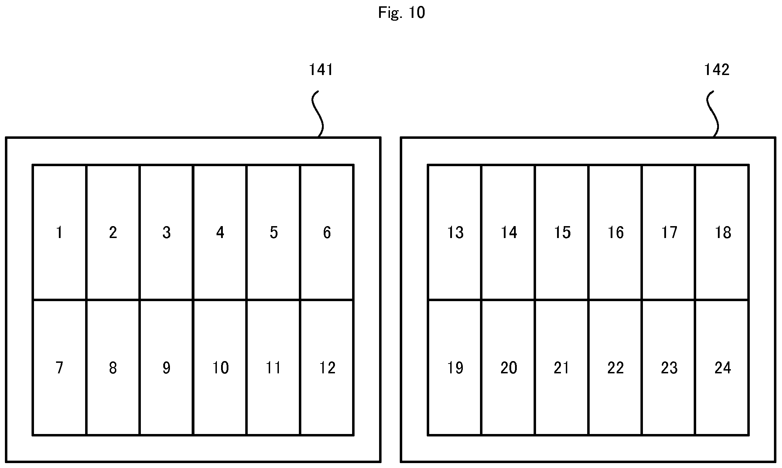

As shown in FIG. 6, serial numbers "1" through "6" are attached as VS numbers for identifying the respective cars 111 through 116. For example, "VS1" indicates the first car 111, and "VS6" indicates the sixth car 116. As described above, the camera numbers D1 through D4 that have been set in the same manner for all the cars are also attached as the information for identifying the locations of the cameras for each car. As shown in FIG. 10, serial numbers "1" through "12" are attached in the order starting from the upper left area towards the lower right area as the display numbers for identifying each of the 12 divided areas in the display region on the monitor 141.

(First Display System)

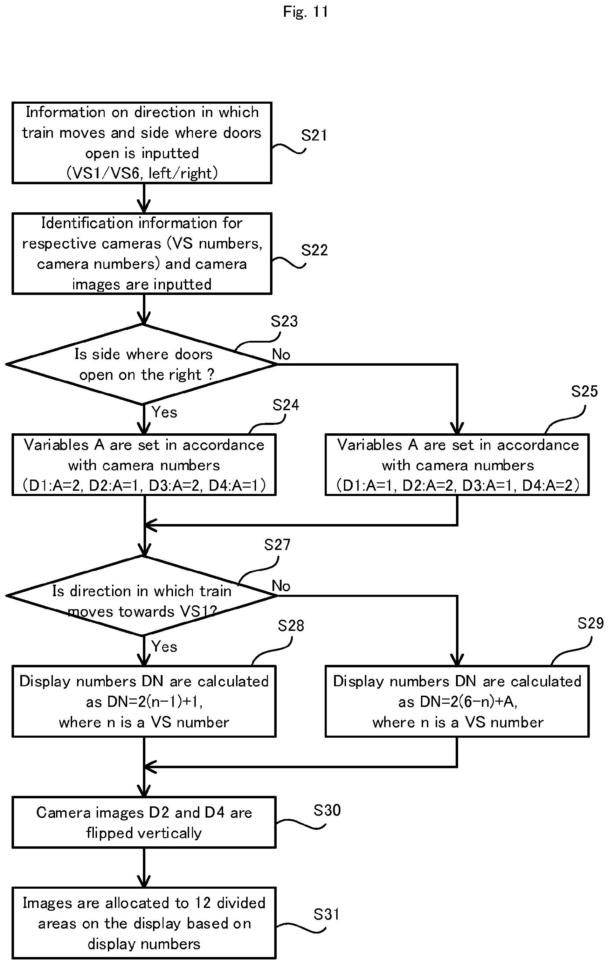

FIG. 11 shows the process flow in the first display system concerning the display on divided areas by means of the monitoring system 100.

The information on the direction in which the train moves and the side where the doors open is inputted into the display control unit of a monitor (step S21). Though the information on the contacts of the train is used as the information on the direction in which the train moves in the present embodiment, the information on the direction in which the train moves that is transmitted from the server may be used. The information on the contacts comes from a signal that is turned on in the front car in the direction in which the train moves and turned off in the rear car in the direction in which the train moves. The VS number (VS1 or VS6) of the front car in the direction in which the train moves can be gained from the information on the contacts. In the present embodiment, information on the doors through which passengers get on or off the train that is transmitted from the server is also used as the information on the side where the doors open.

Next, the information for identifying the respective cameras of which the images are to be displayed on the divided areas and the camera images transmitted from these cameras are inputted into the display control unit of a monitor (step S22). In the present embodiment, the VS numbers (VS1 through VS6) and the camera numbers (D1 through D4) are combined for use as the information for identifying the cameras. The cameras of which the images are to be displayed on the divided areas can be determined from the information on the direction in which the train moves and on the side where the doors open. In addition, the display control unit of a monitor cuts out the camera images in accordance with the information on the frame for cutting out the image that has been set for each camera in advance.

Next, the display control unit of a monitor determines whether the side where the doors open is on the left or on the right on the basis of the information on the side where the doors open (step S23). In response to the results of this determination, different values are set for the variables A set for the respective cameras. That is to say, in the case where the doors on the right side are to be opened in step S23, "2" is set for the variables A for the cameras D1 and D3, and "1" is set for the variables A for the cameras D2 and D4 (step S24). Meanwhile, in the case where the doors on the left side are to be opened in step S23, "1" is set for the variables A for the cameras D1 and D3, and "2" is set for the variables A for the cameras D2 and D4 (step S25).

Next, the display control unit of a monitor determines whether the direction in which the train moves is on the VS1 side (the direction towards the first car) or the VS6 side (the direction towards the sixth car) (step S27). Depending on the results of this determination, the formula for calculating the display numbers DN for allocating the respective cameras is different. That is to say, in the case where the direction in which the train moves is determined to be on the VS1 side in step S27, the following (Formula 1) is used to calculate the display numbers DN (step S28). Meanwhile, in the case where the direction in which the train moves is determined to be on the VS6 side in step S27, the following (Formula 2) is used to calculate the display numbers DN (step S29). Here, n is a VS number in the following (Formula 1) and (Formula 2).

$$DN = 2\,(n - 1) + A \ldots \text{(Formula 1)}$$

$$DN = 2\,(6 - n) + A \ldots \text{(Formula 2)}$$

Next, the display control unit of a monitor carries out a flipping vertically process on the camera images taken by D2 and D4 that are attached to the cars upside down (step S30).

Next, the display control unit of a monitor allocates the camera images on the side where the doors open (the camera images taken by D1 and D3 are as they are, and the camera images taken by D2 and D4 are flipped vertically) to the respective areas that correspond to the display numbers DN calculated on the basis of the identification information of these cameras (step S31).

As described above, the areas to which the respective camera images are allocated are determined on the basis of the display numbers for identifying the respective areas in the display region on a monitor, the VS numbers for identifying the respective cars, and the camera numbers for identifying the locations of the cameras on the cars that are set in the same manner for all the cars.

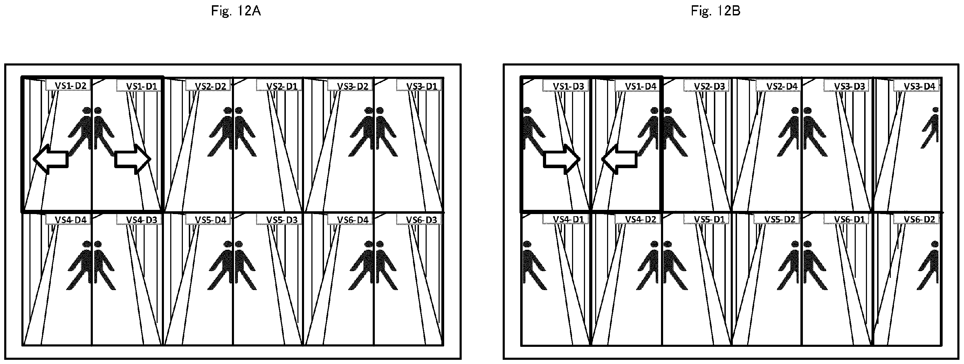

In accordance with the above-described first display system, all the camera images on the right door side or on the left door side of the train comprised of six cars are displayed on the twelve divided areas on one monitor. FIG. 12A shows an example of a screen on the right door side in accordance with the first display system. In addition, FIG. 12B shows an example of a screen on the left door side in accordance with the first display system. As shown in FIGS. 12A and 12B, the camera images taken by the two cameras on each car are allocated to two areas adjacent to each other. That is to say, camera images are displayed as pairs of camera images taken for each car.

In addition, the camera images taken for the cars in the order starting from the front towards the rear in the direction in which the train moves are allocated to the areas that are aligned in the order starting from the upper left towards the lower right on a monitor. Though in the present embodiment the camera images are allocated so as to be aligned in the same order as the alignment of the doors of the train, the camera images may be allocated so as to be aligned in the same order as the alignment of the cameras on each car. As a result, the camera images are displayed on the divided areas that are aligned in the same order as the alignment of the doors or the cameras on the actual cars, and therefore, the trainman can easily recognize the movement of passengers in all the areas to be monitored.

In addition, in an upper right portion of each camera image on a divided area on the display, the identification information of the camera that has taken the image (combination of a VS number and a camera number) is displayed. Accordingly, the trainman can recognize by which camera an image is taken when checking the display.

Here, in the first display system, the camera images taken by the two cameras on the same side of a car look different between the screen on the right door side and the screen on the left door side. For example, the screen on the right door side displays the camera images taken by the two cameras on the same side of a car in such a manner that the same car appears in both images in areas that are away from each other (see FIG. 12A). Meanwhile, the screen on the left door side displays the camera images taken by the two cameras on the same side of a car in such a manner that the same car appears in both images back-to-back (see FIG. 12B). That is to say, the locations on the screen where the car is displayed are on the two sides of this pair of camera images taken by the two cameras on the same side of a car for the screen on the right door side, whereas the locations on the screen where the car is displayed are in the middle of this pair of camera images taken by the two cameras on the same side of a car for the screen on the left door side.

There is a possibility of this difference in the display of causing confusion to the trainman. In the case where a trainman tries to recognize two adjacent camera images as one combined image, the passengers who are moving towards the doors appear to be moving in the opposite direction between the screens on the right door side and the left door side.

As an example to avoid this confusion, a second display system can be used as follows.

(Second Display System)

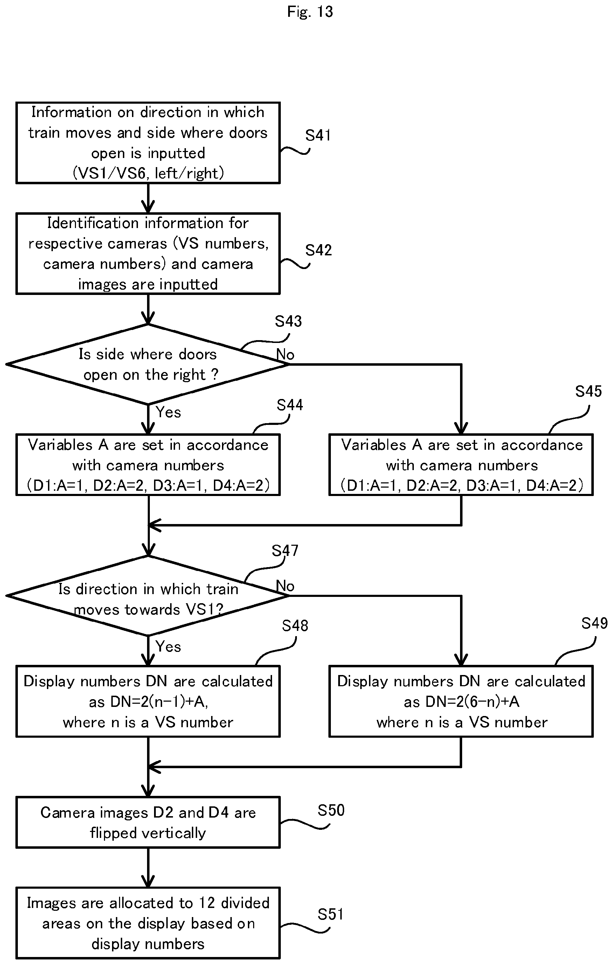

FIG. 13 shows the process flow for the second display system for the display on divided areas in the monitoring system 100.

Steps S41 through S51 in the process flow for the second display system are the same as steps S21 through S31 in the process flow for the first display system, except for step S44.

In the second display system, in the case where it is determined that the doors on the right side are to open in step S43, "1" is set for the variables A for the cameras D1 and D3, and "2" is set for the variables A for the cameras D2 and D4 (step S44), unlike in step S24 in the first display system.

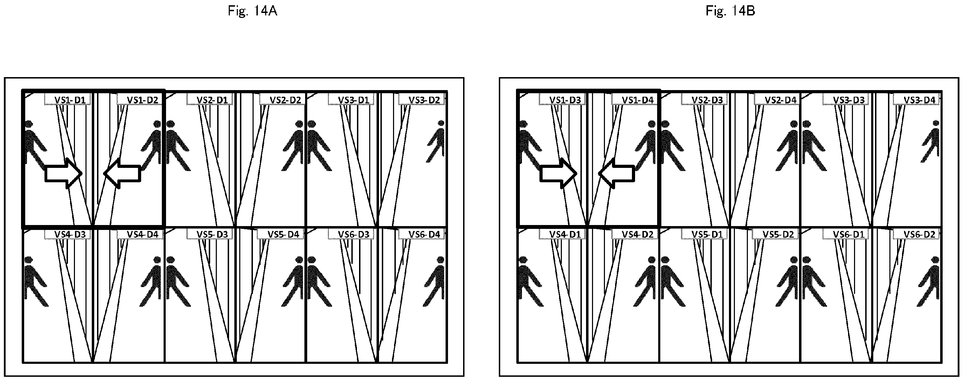

FIG. 14A shows an example of a screen on the right door side in accordance with the second display system. FIG. 14B shows an example of a screen on the left door side in accordance with the second display system. In the second display system, both the screens on the left door side and the right door side display the camera images taken by the two cameras on the same side of a car in such a manner that the same car appears in both images back-to-back. Contrarily, the screens may display the camera images taken by the two cameras on the same side of a car in such a manner that the same car appears in both images in areas that are away from each other. This can be implemented by simply switching the settings for the variables A in steps S44 and S45.

As described above in the second display system, the locations on the screen where the car is displayed are consistently either in the middle or on the two sides of the two adjacent areas displaying the images taken by the two cameras on the same side of the same car. That is to say, the allocation of camera images to the respective areas is controlled so that the locations on the screen where the car is displayed within the two camera images are consistent irrelevant of the side where the doors open. As a result, the passengers moving towards the doors (or exiting through the doors) appear to be moving in the same direction between the screens on the left and right door sides. In particular, when the camera images are allocated so that the locations on the screen where the car is displayed are consistently in the middle of the two adjacent areas displaying the images taken by the two cameras on the same side of the same car, the trainman can easily recognize the images taken by the two cameras on the same side of the same car as one image, which increases the monitoring efficiency. Accordingly, the trainman can more quickly and more accurately recognize the movements of the passengers in all the areas to be monitored.

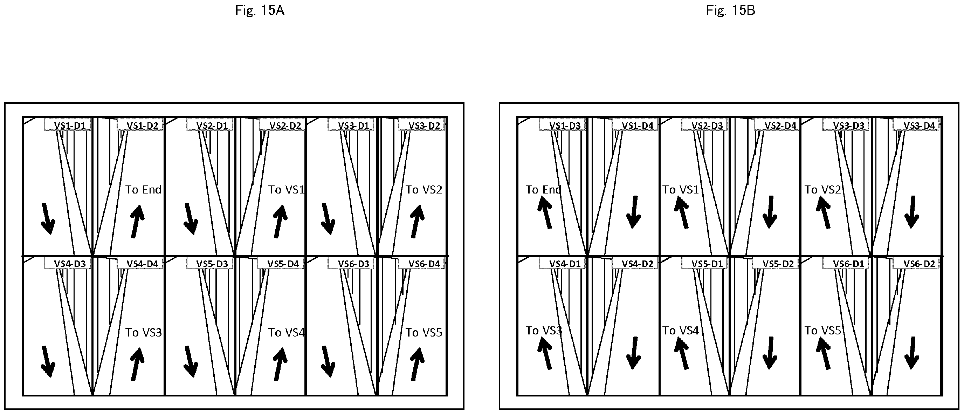

In the second display system, the direction in which the train moves in the display with divided areas differs between the images on the right door side and the images on the left door side. In the images on the right door side, for example, the direction in which the train moves in the display with divided areas is from left to right (see FIG. 15A). Conversely, in the images on the left door side, the direction in which the train moves in the display with divided areas is from right to left (see FIG. 15B).

Though this difference in the display does not prevent a trainman from checking the safety of the passengers, the third display system can be used as in the following example in order to provide a more preferable layout.

(Third Display System)

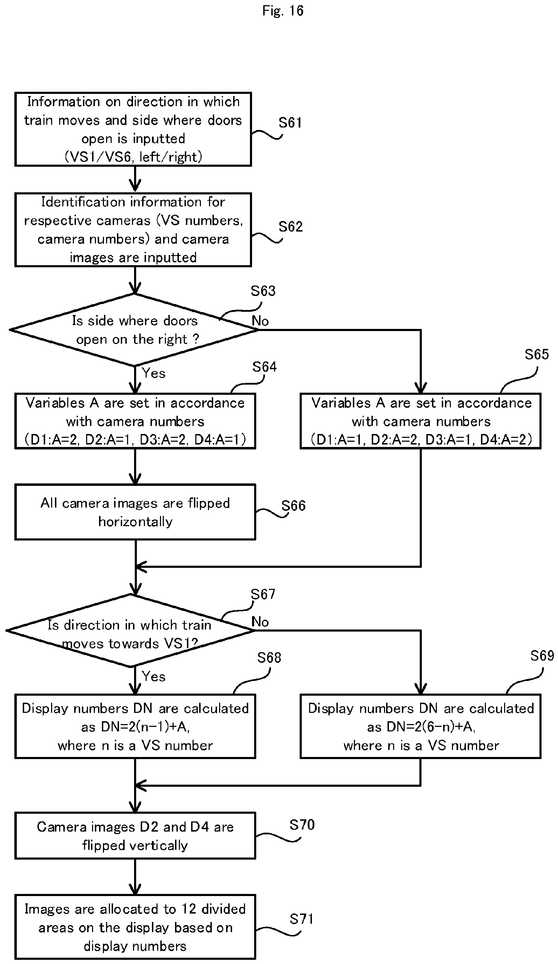

FIG. 16 shows the process flow in the third display system for the display with divided areas in the monitoring system 100.

Steps S61 through S71 in the process flow in the third display system are the same as steps S41 through S51 in the process flow in the second display system, except for steps S64 and S66.

In the case where it is determined that the doors on the right side are to open in step S63 in the third display system, the display control unit of a monitor sets "2" for the variables A for the cameras D1 and D3 and "1" for the variables A for the cameras D2 and D4 in the same manner as in step S24 in the first display system, and furthermore carries out a process of flipping horizontally all the camera images (step S66). That is to say, the process of flipping horizontally all the camera images that are used in the case where the doors on the predetermined side open so that the camera images constantly show the same direction in which the train moves irrelevant of the side where the doors open.

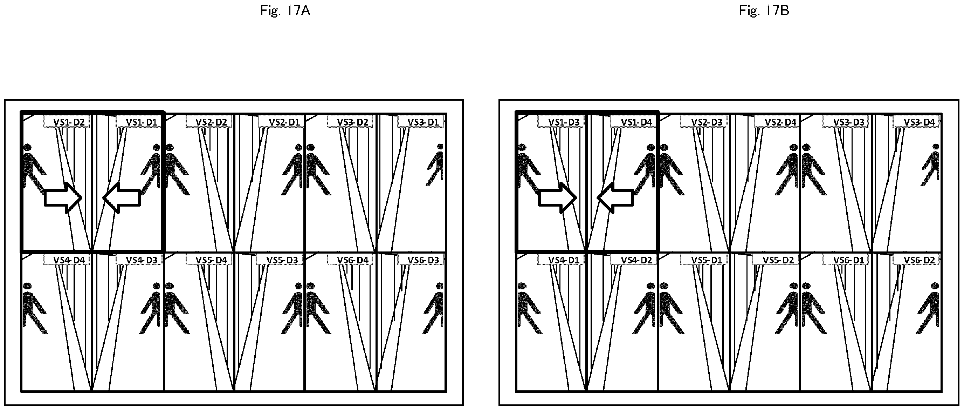

FIG. 17A shows an example of the screen displaying the right door side in the third display system. FIG. 17B shows an example of the screen displaying the left door side in the third display system. In the third display system, the screen displays the camera images taken by the two cameras on the same side of a car in such a manner that the same car appears in both images back-to-back in either case where the screen displays the right door side or the left door side. The trainman can recognize more quickly and more accurately the movement of passengers in all the areas to be monitored.

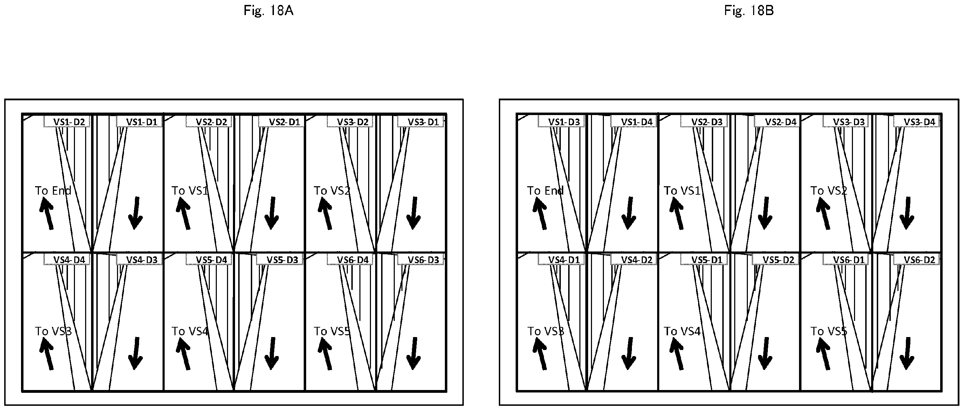

Furthermore, in the third display system, the direction in which the train moves in the display with divided areas can be made the same when the screen displays the right door side or the left door side. That is to say, as illustrated in FIG. 18A that shows an example of the screen displaying the right door side and FIG. 18B that shows an example of the screen displaying the left door side, the direction in which the train moves in the display with divided areas is the same, which is from left to right. As a result, confusion due to the difference in the direction in which the train moves depending on the display with divided areas as in the second display system can be eliminated. Accordingly, the trainman can check the movement of passengers in all the areas to be monitored more efficiently.

As described above, the third display system has an advantage over the second display system. However, the second display system also has an advantage over the third display system, which is that the second display system does not require a process for flipping horizontally the camera images. The process load is relatively large for the flipping of the camera images, and therefore, it is possible that the process time will be long. The second display system is more appropriate than the third display system for the monitoring system where real time monitoring is required.

Though in the above-described examples the processes for cutting out camera images and the processes for flipping vertically the camera images are carried out in the monitors, these processes may be carried out by the respective cameras. In this case, each camera holds in advance information on the frames for cutting out images and information that indicates whether or not a flipping vertically process is necessary, or receives these pieces of information from a monitor or a server before carrying out the processes. That is to say, the cameras that are attached upside-down, for example, may be made to hold in advance information that indicates the necessity of a flipping vertically process, or this information may be transmitted to these cameras from a monitor or a server so that the cameras carry out a flipping vertically process on the camera images on the basis of this information. As a result, the loads on the network and the monitors can be reduced, though the load on the cameras becomes slightly higher.

Though in the above-described examples the display regions on the two monitors 141 and 142 are respectively divided into 12 areas so as to correspond to trains comprised of up to 12 cars, the invention is not limited to these examples.

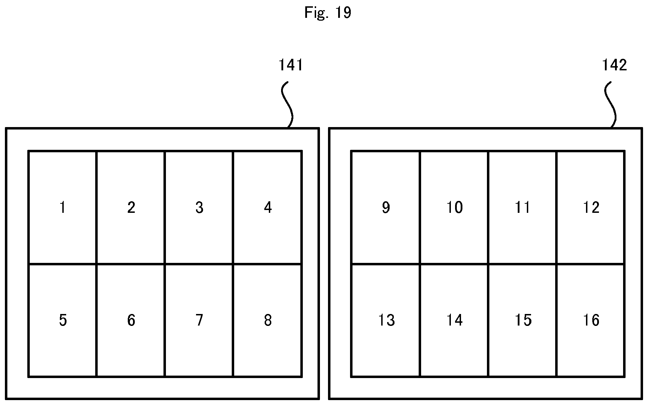

For example, the number of divided areas in a display region may be changed in accordance with the number of cars comprising a train. As shown in the example in FIG. 19, the display regions of two monitors 141 and 142 may be respectively divided into eight areas. In this case, the camera images for a train comprised of eight cars can be displayed on the monitors without leaving any remaining areas unused.

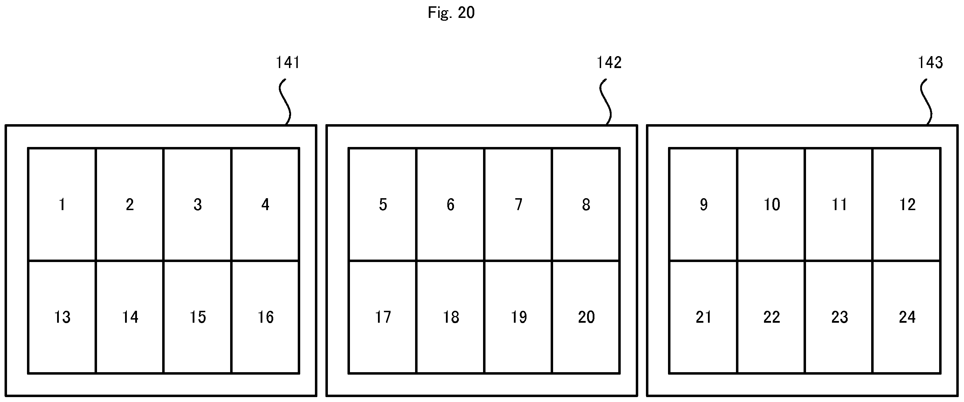

As shown in FIG. 20, three (or more) monitors 141 through 143 may be used. In addition, the display numbers may be arranged regarding a number of monitors that are aligned from left to right as one monitor. That is to say, as shown in the example in FIG. 20, the display numbers "1" through "24" may be arranged to the areas in such an order as to start from the upper row of the monitor 141 and continue through the upper row of the monitor 142, the upper row of the monitor 143, the lower row of the monitor 141, the lower row of the monitor 142 and the lower row of the monitor 143.

A function to enlarge a camera image may also be provided. When any one of a number of camera images is selected through an operation (touch operation, for example) in the state where the camera images are displayed on the monitor 141 with divided areas, for example, the display on the monitor 141 is switched to that in two divided areas left and right so that the selected camera image and the image taken be the other camera on the same side of the same car are enlarged and displayed side-by-side. Alternatively, the display on the monitor 141 is left as it is, and the display on the monitor 142 is switched to that in two divided areas left and right so that the selected camera image and the image taken be the other camera on the same side of the same car are enlarged and displayed side-by-side. After that, when either camera image displayed on the two divided areas left and right on the monitor 141 (or monitor 142) is selected through an operation, the display is switched to that showing only the selected camera image that has been further enlarged. As a result, the trainman is more aware and can further confirm the details of the camera image.

In order to make the system correspond to the display with divided areas in various formats as described above, a number of patterns in terms of the information for controlling the display with divided areas (including information on the format for dividing the display region on a monitor, information on the display numbers for identifying the respective divided areas, and the like) are prepared so that the applied information for controlling the display with divided areas can be switched in accordance with instructions such as to change the number of viewed cars or to enlarge the display.

Though in the above-described examples cameras D1 and D2 or cameras D3 and D4 are provided between two doors so as to face each other, the locations where the cameras D1 through D4 are installed are not limited in the present invention, and various modifications are possible. In FIG. 6, for example, the cameras D1 and D4 may be installed more towards the front car side than the doors 121 and 124, respectively, and the cameras D2 and D3 may be installed more towards the rear car side than the doors 122 and 123, respectively. In this case, the variables A in steps S24 and S25 in FIG. 11 are switched between cameras D1 and D2 and between cameras D3 and D4, respectively.

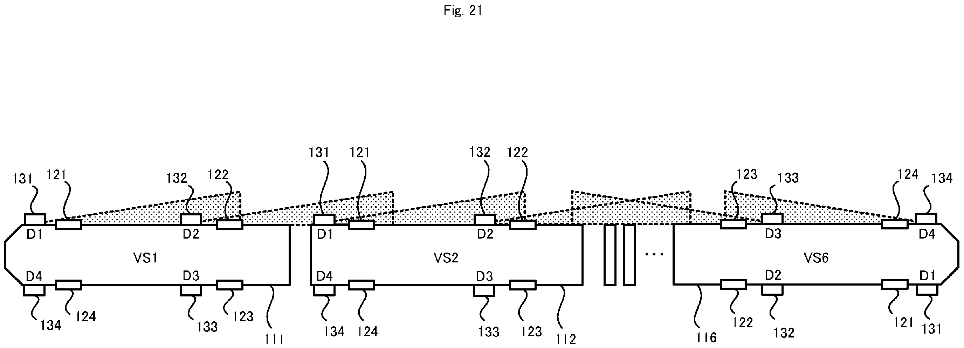

In addition, the cameras D1 and D2 or the cameras D3 and D4 may be installed so as to be directed in the same direction and take images of the different doors respectively in the configuration. As shown in the example in FIG. 21, the cameras D1 and D4 are installed more towards the front car side than the doors 121 and 124, respectively, so as to take images of the doors 121 and 124, and at the same time, the cameras D2 and D3 are installed more towards the front car side than the doors 122 and 123, respectively, so as to face the same direction as the cameras D1 and D4 and take images of the doors 122 and 123 in the configuration. In this case, a process for flipping vertically the images taken by the cameras D3 and D4 is required instead of the process for flipping vertically the images taken by the cameras D2 and D4. Furthermore, the variables A in steps S24 and S25 in FIG. 11 are switched between the cameras D1 and D2 and between the cameras D3 and D4, respectively.

Though in the above-described examples two doors are provided on each side of a car, the number of doors is not limited in the present invention, and three or more doors may be provided on each side of a car. In this case, in order to provide a display with divided areas in the same manner as in the above-described examples, the formulas for calculating the display numbers DN and the variables A may be set so that the images of the doors are aligned on a monitor in the same manner as in the above-described examples on the basis of the information on the direction in which the train moves, on the side where the doors open, and on the identification of the cameras (VS numbers and camera numbers).

In this case, the display numbers DN can be calculated in the following (Formula 3) or (Formula 4), where the number of cars is V, the number of doors (the number of cameras) on one side of a car is D, and the VS number is n.

$$DN = D\,(n - 1) + A \ldots \text{(Formula 3)}$$

$$DN = D\,(V - n) + A \ldots \text{(Formula 4)}$$

Here, the variables A take an integer value of any of 1 through D in accordance with the location of the camera on a car. In addition, which of the above-described (Formula 3) or (Formula 4) is to be used is determined depending on the direction in which the train moves.

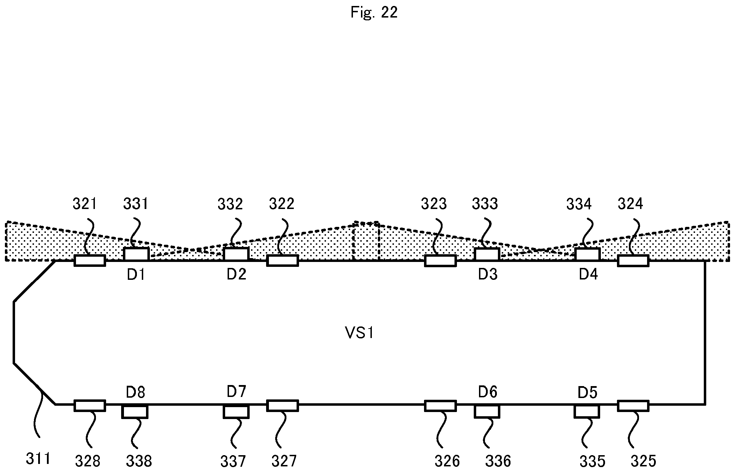

An example of the setting of the variables A in the case where there are four doors and four cameras on each side of a car in an arrangement as in FIG. 22 is described below. FIG. 22 shows only the first car 311 as a representative. The car 311 has four doors 321 through 324 and four cameras 331 through 334 on one side, and four doors 325 through 328 and four cameras 335 through 338 on the other side. Two cameras are arranged between the two front doors so as to face each other on each side of the car, and two cameras are arranged between the two rear doors so as to face each other on each side of the car. The camera numbers D1 through D8 are allocated to the cameras clockwise as viewed from above. In this case, "2" may be set to the variables A for D1 and D5, "1" may be set to the variables for D2 and D6, "4" may be set to the variables A for D3 and D7, and "3" may be set to the variables A for D4 and D8 when the doors on the right side open, while "3" may be set to the variables A for D1 and D5, "4" may be set to the variables for D2 and D6, "1" may be set to the variables A for D3 and D7, and "2" may be set to the variables A for D4 and D8 when the doors on the left side open, for example.

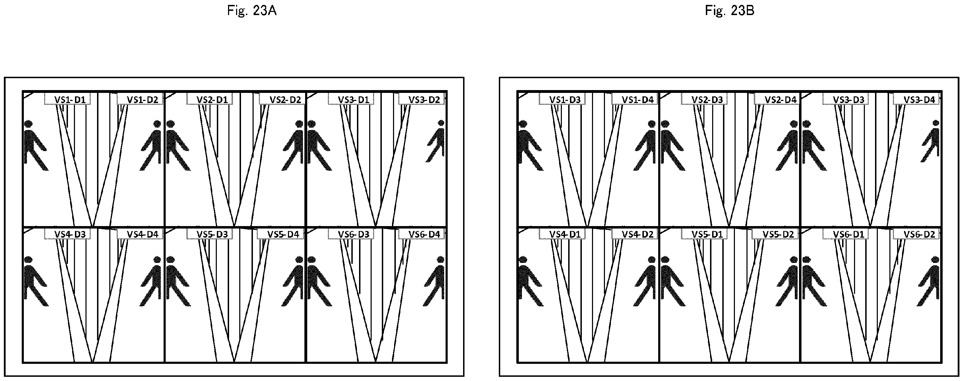

Furtheremore, in the above-described examples, an edge line which delimits each devided areas in the display region (for example, the areas 1 through 12 in FIG. 10) is configured to be displayed, and the camera images are displayed on the divided areas, as shown in FIGS. 12, 14 and 17. However, the edge line may not be provided between the adjacent areas displaying images of the same car. In particular, as shown FIGS. 14 and 17, it is preferable that the display control unit controls the display on the monitor so as not to display the edge line at the border between the two camera images of the same car on which the same car appears back-to-back in both images. Typically, in the case of the second display system, as shown in FIGS. 23A and 23B, the display control unit performs the display without the edge line only at the border between the two camera images of the same car on which the same car appears back-to-back in both images, instead of not displaying the edge line at all borders between the two cameras images of the same car. In this manner, by displaying the edge line surrounding two areas on which the same car is displayed, the images of the two areas are made to look like a single image. As a result, the trainman can easily discriminate the images of the same car, and then, for example, it is possible to easily determine which car should be noticed.

As described above, in the present invention, the display regions of monitors are divided into a number of areas, for each of which an area ID (a display number in the examples) is set, the area IDs for displaying the respective camera images are calculated on the basis of the information that indicates the direction in which the train moves, the information on the side where doors open, and the information for identifying the respective cameras (VS numbers and camera numbers), and the respective camera images are displayed on the areas that correspond to the calculated area IDs.

The configurations of the systems and the devices according to the present invention are not necessarily limited to those shown in the above, and various configurations may be used.

It is also possible for the present invention to provide a method or a system for implementing the processes concerning the configurations in the present invention, a program for implementing such a method or system, or a recording medium for storing such a program.

The display control unit for controlling the display on a monitor may be, for example, implemented by executing a predetermined program on the monitor or in the computer in a server. That is to say, the computer processor that forms a display control unit may implement the display control unit by reading out the program stored in the data storage device such as a hard disk or flash memory onto the memory and executing the program.

[Industrial Applicability]

The present invention can be applied to a monitoring system in such a format that a trainman can check on a monitor the images taken by the cameras attached to the cars of a train.

[Reference Signs List]

    100, 500: monitoring system
    111 through 116, 311, 511 through 516: cars
    121 through 124, 321 through 328, 521 through 524: doors
    131 through 134, 331 through 338, 531 and 532: cameras
    135, 535: switching hub
    141 through 143, 541: monitors
    151: server
    152: video recorder
    153: host server
    220: DOO camera
    221: lens
    210: outer wall of a car

**Claims**

1.  A monitoring system for a train comprised of cars having a number of doors on both sides, where cameras for taking an image of at least the vicinity of a door and a monitor for displaying camera images that are taken by said cameras are mounted on or in said train, is **characterized in that**

        said cameras are allocated for the respective doors,
        the display area of said monitor is divided into a number of areas,
        a display control unit is provided that can control the system so that a number of camera images taken by the cameras on the respective cars are allocated to the respective areas for display, and said display control unit controls the allocation of the camera images for the respective areas on the basis of information that indicates the direction in which said train moves and information that indicates the side on which the doors open.

2. The monitoring system according to claim 1, **characterized in that**

two cameras are provided so as to respectively face two doors that are provided on either side of said cars, and
the two cameras are arranged so as to face each other.

3. The monitoring system according to claim 2, **characterized in that**

said display control unit allocates the two camera images taken by said two cameras to two areas that are adjacent to each other on said monitor.

4. The monitoring system according to claim 3, **characterized in that**

said display control unit controls the allocation of the camera images for the respective areas so that the position at which the car is displayed becomes constant within the two camera images irrelevant of the side where the doors open.

5. The monitoring system according to claim 4, **characterized in that**

said display control unit controls the allocation of the camera images for the respective areas so that the position at which the car is displayed within the two camera images becomes the side of the image border between the two camera images.

6. The monitoring system according to any of claims 1 through 5, **characterized in that**

said display control unit controls the allocation of the camera images for the respective areas so that the camera images are aligned in the same order as the alignment of the doors of said train.

7. The monitoring system according to any of claims 1 through 5, **characterized in that**

said display control unit controls the allocation of the camera images for the respective areas so that the camera images are aligned in the same order as the alignment of the cameras on said train.

8. The monitoring system according to any of claims 1 through 7, **characterized in that**

said display control unit carries out a process for flipping vertically on the camera images taken by the cameras that are attached upside down.

9. The monitoring system according to any of claims 1 through 7, **characterized in that**

a camera carries out a process for inverting an image on the camera image that is taken by the camera in the case where the camera is attached upside down.

10. The monitoring system according to any of claims 1 through 9, **characterized in that**

said display control unit carries out a process for flipping horizontally on all the camera images that are used in the case where the doors on a predetermined side open so that the direction in which said train moves becomes constant within the camera images irrelevant of the side where the doors open.

11. The monitoring system according to any of claims 1 through 10, **characterized in that**

said display control unit determines the areas to which the camera images are allocated on the basis of the information for identifying the respective areas in the display region of said monitor, the information for identifying the respective cars, and the information for identifying the locations of the cameras on each car that have been set to be the same for all the cars.

12. The monitoring system according to any of claims 1 through 11, **characterized in that**

said display control unit switches the display on said monitor in such a manner that the camera image allocated for the selected area from among said areas is enlarged in response to the selection,
wherein optionally said display control unit displays an enlarged camera image that is allocated to the selected area and an enlarged camera image taken by the other camera on the same car in response to the selection, and displays a further enlarged camera image that is allocated to the further selected area in response to the further selection between the two enlarged camera images.

**13.** The monitoring system according to any of claims 1 through 12, **characterized in that**

the respective areas in the display region of said monitor display a camera image and information for identifying the camera that takes the camera image.

**14.** The monitoring system according to any of claims 1 through 13, **characterized in that**

said display control unit controls the allocation of the camera images for respective areas so that the position at which the car is displayed within two camera images of the same car becomes the side of the image border between the two camera images, and displays the two camera images without an edge line at the border between the two camera images, wherein optionally said display control unit displays the two camera images without the edge line at the border between two camera images, and with the edge line at other borders of the two camera images.

**15.** A monitoring method using a monitoring system for a train comprised of cars, where a number of cameras for taking an image of at least the vicinity of a door of a car and a monitor for displaying camera images that are taken by the cameras are mounted on and in said train, **characterized in that**

the display region on said monitor is divided into a number of areas, and an area ID is set for each area,
the area ID for displaying each camera image is calculated on the basis of the information for indicating the direction in which said train moves, the information on the side where the doors open, and the information for identifying the respective cameras, and
the camera image is displayed in the area that corresponds to the calculated area ID.

Fig. 1

Fig. 2

Fig. 4

541

| 3 | 2 | 1 |
|---|---|---|
| 6 | 5 | 4 |

Fig. 3

Fig. 5

EP 3 349 440 A1

Fig. 6

Fig. 8

D2/D4

D1/D3

Fig. 7B

221

220

Fig. 7A

221

220

210

Fig. 9

Fig. 10

141                                    142

| 1 | 2 | 3 | 4 | 5 | 6 |
|---|---|---|---|---|---|
| 7 | 8 | 9 | 10 | 11 | 12 |

| 13 | 14 | 15 | 16 | 17 | 18 |
|----|----|----|----|----|----|
| 19 | 20 | 21 | 22 | 23 | 24 |

EP 3 349 440 A1

Fig. 11

```
┌─────────────────────────────────────┐
│ Information on direction in which    │
│ train moves and side where doors     │   S21
│ open is inputted                     │
│ (VS1/VS6, left/right)                │
└─────────────────────────────────────┘
                  │
                  ▼
┌─────────────────────────────────────┐
│ Identification information for       │
│ respective cameras (VS numbers,      │   S22
│ camera numbers) and camera           │
│ images are inputted                  │
└─────────────────────────────────────┘
                  │
                  ▼
          S23
    ╱─────────────────╲
   ╱  Is side where doors╲  No
   ╲  open on the right ? ╱─────────────┐
    ╲─────────────────╱                 │
          │ Yes    S24                  │ S25
          ▼                             ▼
┌──────────────────────────┐  ┌──────────────────────────┐
│ Variables A are set in   │  │ Variables A are set in   │
│ accordance with camera   │  │ accordance with camera   │
│ numbers                  │  │ numbers                  │
│ (D1:A=2, D2:A=1,         │  │ (D1:A=1, D2:A=2,         │
│  D3:A=2, D4:A=1)         │  │  D3:A=1, D4:A=2)         │
└──────────────────────────┘  └──────────────────────────┘
          │◄──────────────────────────────┘
          ▼
          S27
    ╱─────────────────╲
   ╱ Is direction in which╲  No
   ╲ train moves towards  ╱──────────────┐
    ╲   VS1?             ╱                │
    ╲─────────────────╱                  │
          │ Yes   S28                    │ S29
          ▼                              ▼
┌──────────────────────────┐  ┌──────────────────────────┐
│ Display numbers DN are   │  │ Display numbers DN are   │
│ calculated as            │  │ calculated as            │
│ DN=2(n−1)+1,             │  │ DN=2(6−n)+A,             │
│ where n is a VS number   │  │ where n is a VS number   │
└──────────────────────────┘  └──────────────────────────┘
          │◄──────────────────────────────┘
          ▼
┌──────────────────────────┐
│ Camera images D2 and D4  │   S30
│ are flipped vertically   │
└──────────────────────────┘
          │
          ▼
┌──────────────────────────┐
│ Images are allocated to  │
│ 12 divided areas on the  │   S31
│ display based on         │
│ display numbers          │
└──────────────────────────┘
```

$DN=2(n-1)+1$

$DN=2(6-n)+A$

Fig. 12B

Fig. 12A

Fig. 13

Information on direction in which
train moves and side where doors
open is inputted
(VS1/VS6, left/right)    S41

↓

Identification information for
respective cameras (VS numbers,
camera numbers) and camera
images are inputted    S42

↓

S43
Is side where doors
open on the right ?    No ──────────────────┐

Yes ↓ S44                                    │ S45
Variables A are set in accordance      Variables A are set in accordance
with camera numbers                    with camera numbers
(D1:A=1, D2:A=2, D3:A=1, D4:A=2)        (D1:A=1, D2:A=2, D3:A=1, D4:A=2)

↓ ←──────────────────────────────────────────┘

S47
Is direction in which train
moves towards VS1?    No ──────────────────┐

Yes ↓ S48                                    │ S49
Display numbers DN are calculated      Display numbers DN are calculated
as DN=2(n−1)+A,                        as DN=2(6−n)+A
where n is a VS number                 where n is a VS number

↓ ←──────────────────────────────────────────┘

Camera images D2 and D4 are    S50
flipped vertically

↓

Images are allocated to 12 divided    S51
areas on the display based on
display numbers

Fig. 14A

Fig. 14B

Fig. 15B

Fig. 15A

Fig. 16

```
┌─────────────────────────────────┐
│ Information on direction in which │
│ train moves and side where doors │ ── S61
│          open is inputted         │
│       (VS1/VS6, left/right)       │
└─────────────────────────────────┘
                 │
                 ▼
┌─────────────────────────────────┐
│  Identification information for   │
│ respective cameras (VS numbers,   │ ── S62
│     camera numbers) and camera    │
│          images are inputted      │
└─────────────────────────────────┘
                 │
                 ▼
          ╱───────────────╲            S63
         ╱  Is side where   ╲   No
        ╱  doors open on     ╲───────────────────────┐
         ╲  the right ?     ╱                         │
          ╲───────────────╱                           │
                 │ Yes                                 │
                 │         S64                         │         S65
                 ▼                                     ▼
┌─────────────────────────────────┐   ┌─────────────────────────────────┐
│  Variables A are set in accordance │   │  Variables A are set in accordance │
│      with camera numbers          │   │      with camera numbers          │
│ (D1:A=2, D2:A=1, D3:A=2, D4:A=1)  │   │ (D1:A=1, D2:A=2, D3:A=1, D4:A=2)  │
└─────────────────────────────────┘   └─────────────────────────────────┘
                 │                                     │
                 ▼                                     │
┌─────────────────────────────────┐                   │
│   All camera images are flipped   │ ── S66            │
│            horizontally           │                   │
└─────────────────────────────────┘                   │
                 │                                     │
                 ▼◄────────────────────────────────────┘
          ╱───────────────╲            S67
         ╱ Is direction in  ╲   No
        ╱  which train moves  ╲──────────────────────┐
         ╲  towards VS1?     ╱                        │
          ╲───────────────╱                           │
                 │ Yes     S68                         │         S69
                 ▼                                     ▼
┌─────────────────────────────────┐   ┌─────────────────────────────────┐
│ Display numbers DN are calculated │   │ Display numbers DN are calculated │
│         as DN=2(n−1)+A,           │   │         as DN=2(6−n)+A,           │
│      where n is a VS number       │   │      where n is a VS number       │
└─────────────────────────────────┘   └─────────────────────────────────┘
                 │                                     │
                 ▼◄────────────────────────────────────┘
┌─────────────────────────────────┐
│   Camera images D2 and D4 are     │ ── S70
│         flipped vertically        │
└─────────────────────────────────┘
                 │
                 ▼
┌─────────────────────────────────┐
│ Images are allocated to 12 divided│
│  areas on the display based on    │ ── S71
│         display numbers           │
└─────────────────────────────────┘
```

Fig. 17B

Fig. 17A

Fig. 18B

Fig. 18A

Fig. 19

Fig. 20

141

142

143

| 1 | 2 | 3 | 4 |
|---|---|---|---|
| 13 | 14 | 15 | 16 |

| 5 | 6 | 7 | 8 |
|---|---|---|---|
| 17 | 18 | 19 | 20 |

| 9 | 10 | 11 | 12 |
|---|---|---|---|
| 21 | 22 | 23 | 24 |

Fig. 21

EP 3 349 440 A1

Fig. 22

Fig. 23A

Fig. 23B

EP 3 349 440 A1

Europäisches
Patentamt

European
Patent Office

Office européen
des brevets

# EUROPEAN SEARCH REPORT

Application Number

EP 18 15 1266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 268 024 A (TRANSPORTATION SYSTEMS & MARKE [GB]) 22 December 1993 (1993-12-22) * abstract * * page 1, line 3 - page 2, line 14 * * page 2, line 21 - page 4, line 20 * ----- | 1-15 | INV. H04N7/18 B61D49/00 B61L15/00 |
| X,D | WO 2015/145736 A1 (HITACHI INT ELECTRIC INC [JP]) 1 October 2015 (2015-10-01) * abstract * | 1-15 | |
| X,D,P | & EP 3 125 542 A1 (HITACHI INT ELECTRIC INC [JP]) 1 February 2017 (2017-02-01) * abstract * * paragraphs [0030] - [0054] * * paragraphs [0108] - [0116] * ----- | 1-15 | |
| | | | TECHNICAL FIELDS SEARCHED (IPC) |
| | | | B61L H04N B61D |

The present search report has been drawn up for all claims

| Place of search | Date of completion of the search | Examiner |
|---|---|---|
| The Hague | 4 June 2018 | Naci, Suphi Umut |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 1266

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2018

| Patent document cited in search report | | Publication date | Patent family member(s) | | Publication date |
|---|---|---|---|---|---|
| GB 2268024 | A | 22-12-1993 | AU | 4506193 A | 24-01-1994 |
| | | | GB | 2268024 A | 22-12-1993 |
| | | | WO | 9400953 A1 | 06-01-1994 |
| WO 2015145736 | A1 | 01-10-2015 | EP | 3125542 A1 | 01-02-2017 |
| | | | JP | WO2015145736 A1 | 13-04-2017 |
| | | | US | 2017013237 A1 | 12-01-2017 |
| | | | WO | 2015145736 A1 | 01-10-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2015145736 A